# FASCICULE DE BREVET EUROPEEN

(11) **EP 2 085 267 B1**
(45) Date de publication et mention de la délivrance du brevet: **22.12.2010**
(21) Numéro de dépôt: 09305098.7
(22) Date de dépôt: 02.02.2009
(51) Int. Cl.: B60R 7/04, B60N 2/46, E05D 7/00, B60R 11/00

(54) **Bac de rangement pour véhicule**
Lagerbox für Fahrzeuge
Storage box for vehicles

(30) Priorité: 04.02.2008 FR 0850671
(43) Date de publication de la demande: 05.08.2009
(73) Titulaire: Renault S.A.S., 92100 Boulogne-Billancourt (FR)
(72) Inventeur: Chheang, Nakry, 78470, Saint-Rémy-lès-Chevreuse (FR); Marceau, Thierry, 92500, Rueil-Malmaison (FR); Laumesfeld, Laurent, 92410, Ville d'Avray (FR)

(56) Documents cités:
- FR-A- 2 886 898
- US-A1- 2006 237 985

## Description

L'invention concerne un bac de rangement à disposer dans l'habitacle d'un véhicule, le bac comprenant un organe charnière, un corps en plastique et un couvercle, le corps et le couvercle étant liés ensemble, à pivotement, par l'organe de charnière.

De tels bacs peuvent prendre la forme de consoles centrales.

Un problème que l'on vise ici à résoudre est de réaliser un système de charnière avec des blocs ou parties qui soient aisé(e)s à mettre en place, d'une fixation efficace, performante une fois montée en place et d'un coût bien maitrisé.

Une solution proposée consiste en ce que l'organe charnière comprenne une première et une deuxième parties en matière plastique montées pivotantes l'une par rapport à l'autre autour d'un arbre, la première partie étant fixée à l'insert du couvercle, la seconde partie présentant plusieurs plots saillants engagés dans des cavités du corps du bac pour y être maintenus, les plots comprenant des ergots de verrouillage dont l'engagement, suivant une direction prédéterminée, dans des zones en creux formées dans lesdites cavités empêche le retrait ultérieur, des moyens complémentaires de fixation montés entre le corps du bac et la seconde partie de l'organe charnière étant adaptés à les fixer ensemble, une fois les ergots verrouillés dans lesdites zones en creux.

Le document US 2006/0237985 A1, qui constitue l'état de la technique le plus proche, décrit :
un bac de rangement à disposer dans l'habitacle d'un véhicule, le bac comprenant un organe charnière, un corps en plastique et un couvercle, le corps et le couvercle étant liés ensemble, à pivotement, par l'organe de charnière, l'organe charnière comprend une première et une deuxième parties en matière plastique montées pivotantes l'une par rapport à l'autre autour d'un arbre, la première partie étant fixée à l'insert du couvercle, la seconde partie présentant un plot saillants engagé dans une cavité du corps du bac pour y être maintenus, les plot comprenant des ergots de verrouillage dont l'engagement,
suivant une direction prédéterminée, dans des zones en creux formées dans lesdites cavités est apte à en empêcher le retrait ultérieur, des moyens complémentaires de fixation montés entre le corps du bac et la seconde partie de l'organe charnière étant adaptés à les fixer ensemble, une fois le ergot est verrouillé dans lesdites zones en creux.

D'autres caractéristiques innovantes et avantages de l'invention ressortiront clairement de la description qui en est faite ci-après, à titre indicatif et nullement limitatif, en référence aux dessins annexés où :
- la figure 1 montre un bac innovant, ici une console centrale, entre les sièges avant de l'habitacle d'un véhicule,
- la figure 2 présente une réalisation de ce bac, en éclaté,
- la figure 3 présente une vue agrandie locale de la figure 2,
- les figures 4 et 5 sont des coupes respectivement selon IV-IV et V-V de la figure 2, dans un état monté des éléments, couvercle ouvert, organe charnière monté,
- la figure 6 est une coupe selon V-V de la figure 2, dans un état monté des éléments, couvercle fermé,
- et la figure 7 est une coupe selon VII-VII de la figure 2, dans un état monté des éléments.

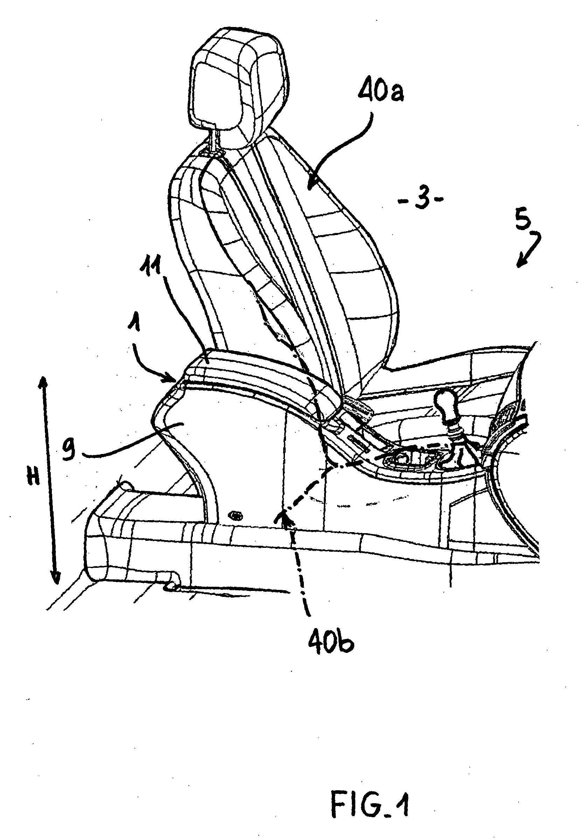

Sur la figure 1, est représenté un exemple d'implantation d'un bac de rangement 1 à disposer dans l'habitacle 3 d'un véhicule 5, ici une automobile.

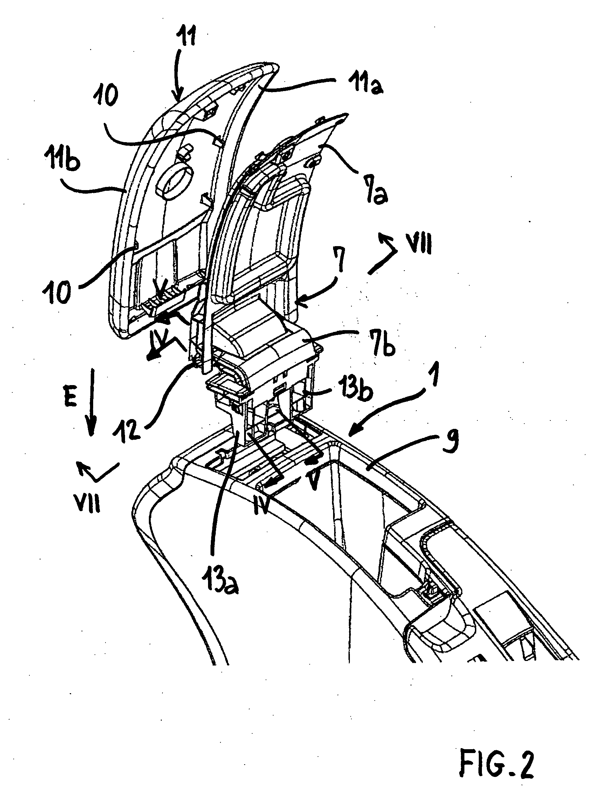

Comme il est représenté à la figure 2, le bac comprend un organe charnière 7, un corps 9 en plastique et un couvercle 11.

L'organe charnière comprend une première et une deuxième parties 7a,7b en matière plastique montées pivotantes l'une par rapport à l'autre autour d'un arbre 12.

Le bac est monté entre le siège conducteur 40a du véhicule 5 et le siège passager 40b situé à côté de lui.

Le bac définit ainsi la console centrale de ce véhicule, avec son couvercle 11 disposé à une hauteur H adaptée pour servir d'appui-coude, en position fermée, alors que la première partie 7a de l'organe charnière est rabattue à plat sur la seconde partie 7b.

Le corps 9 et le couvercle 11 sont liés ensemble, à pivotement, par l'organe de charnière 7.

Le couvercle 11 comprend un insert en plastique rigide 11a et une fine peau (extérieure) d'aspect 11b, typiquement en plastique souple surmoulé, ou en cuir fixé à l'insert.

La première partie 7a est fixée à l'insert 11a, notamment par les clips 10 ; cf. fig.2.

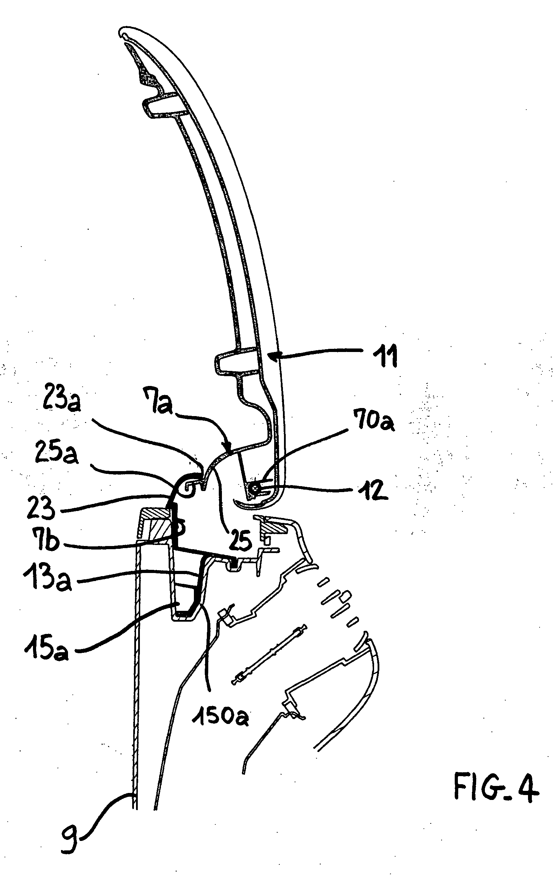

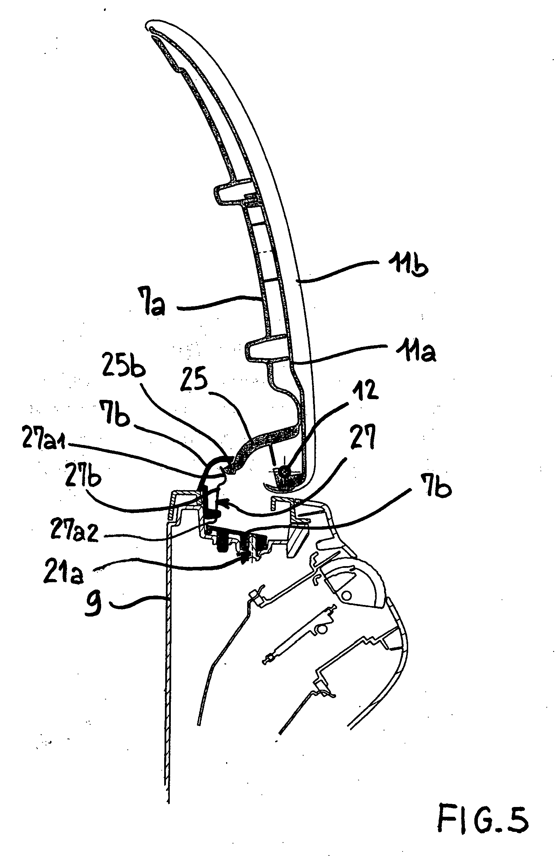

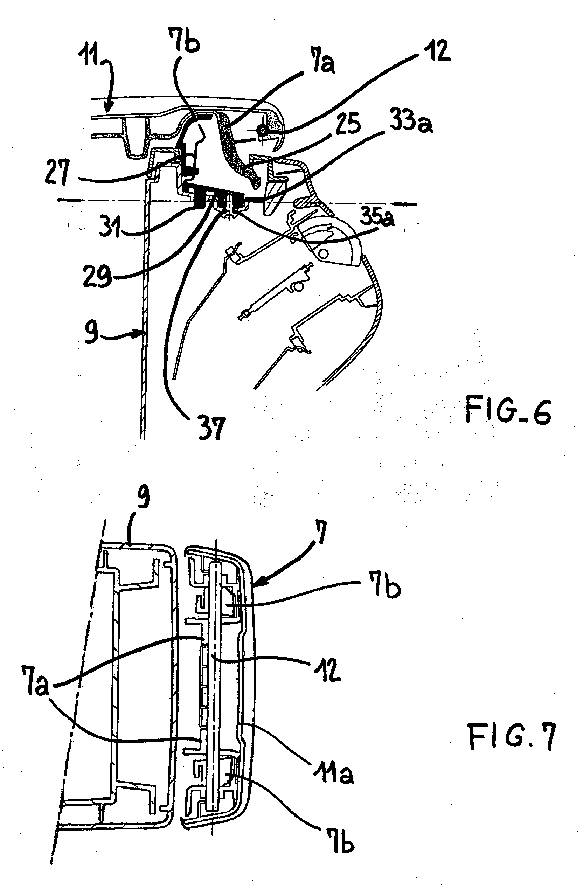

Favorablement, et comme illustré figs.5,6, l'arbre 12 sera localement porté par cet insert. Fig.4, on voit qu'ailleurs, l'arbre 12 est localement maintenu dans un canal 70a de la première partie 7a de l'organe de charnière.

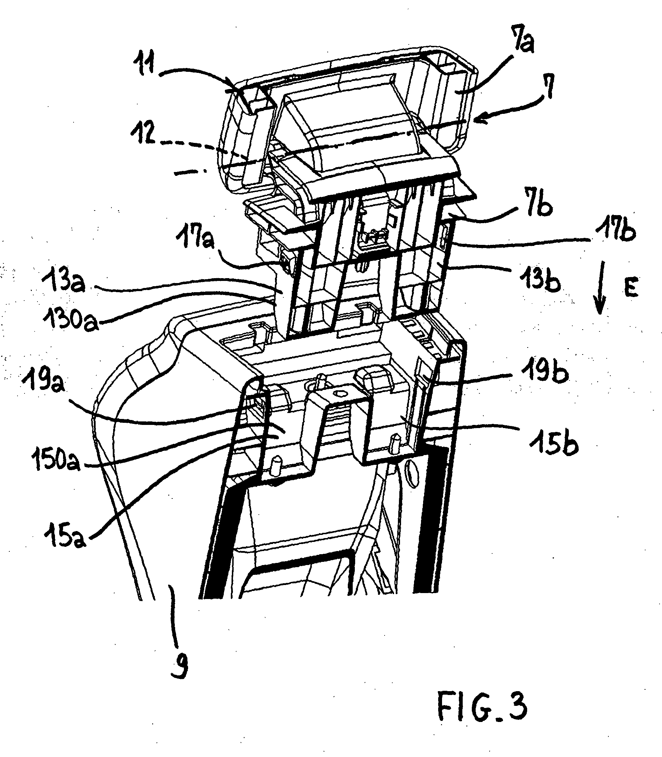

La fig.7 détaille également le montage avec la partie 7b. Cette seconde partie 7b présente par ailleurs plusieurs plots saillants 13a, 13b engagés dans des cavités 15a, 15b du corps 9 du bac pour y être maintenus fixement ; cf. fig.3 notamment.

Les plots 13a, 13b comprennent des ergots 17a, 17b de verrouillage dont l'engagement, suivant une direction prédéterminée E, dans les zones en creux 19a, 19b formées dans les cavités 15a, 15b du corps du bac en empêche le retrait ultérieur ; cf. notamment fig.3.

Des moyens complémentaires de fixation, tels 21a (fig.5) sont montés entre le corps 9 et la seconde partie 7b de l'organe charnière, pour les fixer ensemble, une fois les ergots 17a, 17b verrouillés dans les zones en creux 19a, 19b.

La seconde partie 7b de charnière présente, à un niveau situé au-dessus des plots saillants 13a, 13b, une forme intérieurement concave 23 face à laquelle se déplace, avec le pivotement de la première partie 7a de l'élément de charnière par rapport à la seconde, une zone 25 de cette première partie de charnière 7a.

La zone 25 forme une lame convexe définissant localement une butée 25a de retenue du couvercle 11 lorsqu'en pivotant dans un sens (ouverture par basculement vers l'arrière) par rapport au corps 9 du bac, une portion de la lame 25 vient buter contre une partie terminale 23a de ladite forme intérieurement concave 23 de la seconde partie 7b de charnière ; cf. fig.4.

Localement (fig.5), la lame convexe 25 présente un doigt 25b engageant de façon forcée une première extrémité 27a1 d'une lamelle élastique 27, au-delà d'un épaulement 27b de celle-ci, dans une position de pleine ouverture du couvercle 11.

La lamelle élastique 27, ici métallique, est fixée à la seconde partie 7b de l'organe charnière, vers sa seconde extrémité 27a2.

Cette seconde partie 7b présente, en partie inférieure et à l'écart des plots 13a, 13b, une paroi de fond 29 sous laquelle font saillie au moins un pion de centrage 31 et des pions taraudés, tels 33a.

Ces derniers coïncident avec des orifices, tels 35a, ménagés dans le corps 9 du bac, les deux recevant par-dessous des vis, telles que 37, communes de fixation, pour définir une partie au moins des moyens complémentaires de fixation précités.

Chaque plot, tel 13a, et la cavité, telle 15a, qui le reçoit présentent des parois latérales (ici arrière ; cf. fig.3), telles respectivement 130a, 150a, de guidage inclinées par rapport à la verticale et s'étendant vers le bas (extrémité libre). On remarquera, notamment fig.3, que ces parois 130a, 150a sont favorablement adjacentes aux parois (ici de côté) pourvues respectivement des ergots (tels 17a) et des zones en creux (telles 19a).

Eventuellement le bac de l'invention pourrait être monté ailleurs dans le véhicule, comme par exemple au milieu de la banquette arrière.

## Revendications

1. Bac de rangement à disposer dans l'habitacle d'un véhicule, le bac comprenant un organe charnière (7), un corps (9) en plastique et un couvercle (11), le corps et le couvercle étant liés ensemble, à pivotement, par l'organe de charnière, l'organe charnière comprenant une première et une deuxième parties (7a,7b) en matière plastique montées pivotantes l'une par rapport à l'autre autour d'un arbre (12), la première partie étant fixée à l'insert (11a) du couvercle (11), la seconde partie présentant plusieurs plots saillants (13a,13b) engagés dans des cavités (15a,15b) du corps (9) du bac pour y être maintenus, les plots comprenant des ergots (17a,17b) de verrouillage dont l'engagement, suivant une direction prédéterminée, dans des zones en creux (19a,19b) formées dans lesdites cavités étant apte à en empêcher le retrait ultérieur, des moyens complémentaires de fixation (21a,37) montés entre le corps (9) du bac et la seconde partie (7b) de l'organe charnière étant adaptés à les fixer ensemble, une fois les ergots verrouillés dans lesdites zones en creux,
chaque plot et la cavité qui le reçoit présentent des parois latérales de guidage (130a,150a) inclinées par rapport à la verticale et adjacentes aux parois pourvues respectivement des ergots (17a,17b) et des zones en creux (19a,19b).

2. Bac selon la revendication 1, **caractérisé en ce que** la seconde partie (7b) de charnière présente, à un niveau situé au-dessus des plots saillants (13a,13b) une forme intérieurement concave (23) face à laquelle, une zone (25) de ladite première partie de charnière formant une lame convexe est apte à se déplacer avec le pivotement de la première partie de l'élément de charnière par rapport à la seconde, ladite zone (25) de la première partie étant apte à définir localement une butée (25a) de retenue du couvercle, lorsqu'en pivotant dans un sens par rapport au corps du bac une portion de ladite lame vient buter contre une partie terminale de ladite forme intérieurement concave de la seconde partie de charnière.

3. Bac selon la revendication 2, **caractérisé en ce que**, localement, la lame convexe présente un doigt(25b) apte à engager de façon forcée une première extrémité d'une lamelle élastique (27), au-delà d'un épaulement (27b) de celle-ci, dans une position de pleine ouverture du couvercle (11), la lamelle élastique étant fixée à la seconde partie de l'organe charnière, vers sa seconde extrémité.

4. Bac selon l'une des revendications précédentes, **caractérisé en ce que** la seconde partie de l'organe charnière présente, en partie inférieure et à l'écart des plots, une paroi de fond sous laquelle font saillie au moins un pion de centrage et des pions taraudés, ces derniers coïncidant avec des orifices ménagés dans le corps du bac, les pions de centrage et les pions taraudés recevant par-dessous des vis communes de fixation.

5. Bac selon l'une des revendications précédentes, **caractérisé en ce que** la première partie de l'organe charnière est fixée à l'insert et **en ce que** l'arbre(12) est porté par cet insert.

6. Bac selon l'une des revendications 1 à 4, **caractérisé en ce que** l'arbre (12) est localement maintenu dans un canal (70a) de la première partie (7a) de l'organe charnière.

7. Véhicule automobile, **caractérisé en ce qu'**il comprend un habitacle dans lequel un bac selon l'une des revendications précédentes est monté entre le siège conducteur du véhicule et le siège passager situé à côté de lui, le bac définissant alors la console centrale de ce véhicule, avec son couvercle disposé à une hauteur adaptée pour servir d'appui-coude, en position fermée, alors que la première partie de l'organe charnière est rabattue à plat sur la seconde.

## Claims

1. Storage box to be positioned in the passenger compartment of a vehicle, the box comprising a hinge member (7), a plastic body (9) and a lid (11), the body and the lid being linked together, pivot-wise, by the hinge member, the hinge member comprising a first and a second portions (7a, 7b) made of plastic material mounted to pivot relative to one another about a shaft (12), the first portion being fixed to the insert (11a) of the lid (11), the second portion having a number of projecting studs (13a, 13b) engaged in cavities (15a, 15b) in the body (9) of the box in order to be secured therein, the studs comprising locking pins (17a, 17b) whose engagement, in a predetermined direction, in hollow regions (19a, 19b) formed in said cavities being able to prevent the subsequent removal thereof, complementary fixing means (21a, 37) mounted between the body (9) of the box and the second portion (7b) of the hinge member being suitable for fixing them together, once the pins are locked in said hollow regions,
each stud and the cavity that receives it having lateral guide walls (130a, 150a) inclined relative to the vertical and adjacent to the walls respectively provided with the pins (17a, 17b) and the hollow regions (19a, 19b).

2. Box according to Claim 1, **characterized in that** the second hinge portion (7b) has, at a level situated above the projecting studs (13a, 13b), an internally concave shape (23) opposite which, a region (25) of said first hinge portion forming a convex plate is able to be displaced with the pivoting of the first portion of the hinge element relative to the second, said region (25) of the first portion being able to locally define a lid retaining abutment (25a), when, by pivoting in a direction relative to the body of the box, a portion of said plate abuts against a terminal portion of said internally concave form of the second hinge portion.

3. Box according to Claim 2, **characterized in that**, locally, the convex plate has a finger (25b) able to forcibly engage a first end of an elastic blade (27), beyond a shoulder (27b) of the latter, in a fully open position of the lid (11), the elastic blade being fixed to the second portion of the hinge member, towards its second end.

4. Box according to one of the preceding claims, **characterized in that** the second portion of the hinge member has, in the bottom portion and away from the studs, a bottom wall under which project at least one centring pin and tapped pins, the latter coinciding with orifices provided in the body of the box, the centring pins and the tapped pins receiving common fixing screws from below.

5. Box according to one of the preceding claims, **characterized in that** the first portion of the hinge member is fixed to the insert and **in that** the shaft (12) is borne by this insert.

6. Box according to one of Claims 1 to 4, **characterized in that** the shaft (12) is locally secured in a channel (70a) of the first portion (7a) of the hinge member.

7. Motor vehicle, **characterized in that** it comprises a passenger compartment in which a box according to one of the preceding claims is mounted between the vehicle driver's seat and the passenger seat located alongside it, the box then defining the central console of the vehicle, with its lid positioned at a height suitable to serve as an elbow rest, when in the closed position, when the first portion of the hinge member is folded down flat onto the second.

## Patentansprüche

1. Verstaubehälter, der in der Fahrgastzelle eines Fahrzeugs anzuordnen ist und ein Scharnierelement (7), einen Körper (9) aus Kunststoff und einen Deckel (11) umfasst, wobei der Körper und der Deckel über das Scharnierelement zum Schwenken miteinander verbunden sind, das einen ersten und einen zweiten Teil (7a, 7b) aus Kunststoffmaterial umfasst, die zueinander schwenkend um einen Drehzapfen (12) montiert sind, wobei der erste Teil am Einsatz (11a) des Deckels (11) befestigt ist und der zweite Teil mehrere vorstehende Nocken (13a, 13b) aufweist, die in Hohlräumen (15a, 15b) des Körpers (9) des Behälters in Eingriff stehen, um dort gehalten zu werden, wobei die Nocken Verriegelungsbolzen (17a, 17b) umfassen, deren Eingriff in einer vorbestimmten Richtung in vertieften Bereichen (19a, 19b), die in den Hohlräumen ausgebildet sind, dazu geeignet ist, das anschließende Herausziehen der Nocken zu verhindern, wobei komplementäre Befestigungsmittel (21a, 37), die zwischen dem Körper (9) des Behälters und dem zweiten Teil (7b) des Scharnierelements montiert sind, geeignet sind, sie aneinander zu befestigen, sobald die Bolzen in den vertieften Bereichen verriegelt sind,
wobei jeder Nocken und der Hohlraum, der ihn aufnimmt, seitliche Führungswände (130a, 150a) aufweist, die zur Vertikalen geneigt und den jeweils mit den Bolzen (17a, 17b) und den vertieften Bereichen (19a, 19b) versehenen Wänden benachbart sind.

2. Behälter nach Anspruch 1, **dadurch gekennzeichnet, dass** der zweite Scharnierteil (7b) auf einer über den vorragenden Nocken (13a, 13b) gelegenen Höhe eine innen konkave Form (23) aufweist, gegen die sich ein Bereich (25) des ersten Scharnierteils, der eine konvexe Zunge bildet, beim Schwenken des ersten Teils des Scharnierelements bezüglich des zweiten verschieben kann, wobei der Bereich (25) des ersten Teils geeignet ist, örtlich einen Halteanschlag (25a) für den Deckel zu definieren, wenn ein Abschnitt der Zunge beim Schwenken in einer Richtung bezüglich des Körpers des Behälters an einen Endteil der innen konkaven Form des zweiten Scharnierteils anschlägt.

3. Behälter nach Anspruch 2, **dadurch gekennzeichnet, dass** die konvexe Zunge örtlich einen Finger (25b) aufweist, der geeignet ist, ein erstes Ende einer elastischen Leiste (27) oberhalb eines Vorsprungs (27b) davon in einer vollständig offenen Position des Deckels (11) gezwungen in Eingriff zu nehmen, wobei die elastische Leiste zu ihrem zweiten Ende hin am zweiten Teil des Scharnierelements befestigt ist.

4. Behälter nach einem der vorhergehenden Ansprüche, **dadurch gekennzeichnet, dass** der zweite Teil des Scharnierelements am unteren Teil und von den Nocken beabstandet eine Bodenwand aufweist, unter der mindestens ein Zentrierstift und Gewindestifte vorragen, wobei diese Letzteren mit Öffnungen im Körper des Behälters zusammenfallen, wobei der Zentrierstift und die Gewindestifte von unten gemeinsame Befestigungsschrauben aufnehmen.

5. Behälter nach einem der vorhergehenden Ansprüche, **dadurch gekennzeichnet, dass** der erste Teil des Scharnierelements am Einsatz befestigt ist und dass der Drehzapfen (12) von diesem Einsatz getragen ist.

6. Behälter nach einem der Ansprüche 1 bis 4, **dadurch gekennzeichnet, dass** der Drehzapfen (12) örtlich in einem Kanal (70a) des ersten Teils (7a) des Scharnierelements gehalten ist.

7. Kraftfahrzeug, **dadurch gekennzeichnet, dass** es eine Fahrgastzelle umfasst, in der ein Behälter nach einem der vorhergehenden Ansprüche zwischen dem Fahrersitz des Fahrzeugs und dem Beifahrersitz montiert ist, wobei der Behälter somit die Mittelkonsole dieses Fahrzeugs definiert, wobei sein Deckel in einer Höhe angeordnet ist, die geeignet ist, in geschlossener Position als Ellenbogenstütze zu dienen, während der erste Teil des Scharnierelements flach auf den zweiten heruntergeklappt ist.
